# EUROPÄISCHE PATENTANMELDUNG

(11) **EP 4 238 877 A1**
(43) Veröffentlichungstag der Anmeldung: **06.09.2023**
(21) Anmeldenummer: 23154992.4
(22) Anmeldetag: 03.02.2023
(51) Int. Cl.: B65B 1/28, B65B 9/15, B65B 9/18, B65B 9/20, B65B 51/04, B65B 51/30, B65B 55/02, B65B 59/00, G01N 1/20

(54) **VORRICHTUNG ZUR AUTOMATISCHEN ABFÜLLUNG EINER PROBE**

(30) Priorität: 07.02.2022 DE 102022102814; 24.03.2022 DE 102022107034
(71) Anmelder: Hecht Technologie GmbH, 85276 Pfaffenhofen (DE)
(72) Erfinder: PILSNER, Florian, 85276 Pfaffenhofen/Ilm (DE); MATLOKA, Andreas, 85276 Pfaffenhofen/Ilm (DE); HILDEBRANDT, Marc, 85276 Pfaffenhofen/Ilm (DE)
(74) Vertreter: Kilian Kilian & Partner

(57) **Zusammenfassung**

Die Erfindung betrifft eine Vorrichtung (1) zur automatischen Abfüllung einer pulver-/granulatförmigen Probe, aufweisend
eine Folienaufnahme (2) zur Aufnahme eines Folienvorrates an einer schlauchförmigen Folie (3), derart, dass ein Abschnitt der schlauchförmigen Folie (3) zugänglich und zur Bildung eines Probebeutels (30) radial verschließbar ist;
eine Probenführung (4) zur Führung der pulver-/granulatförmigen Probe in den Probebeutel (30, 30a) nach dessen Bildung; und
eine Auszugsvorrichtung (5), die eingerichtet ist, die schlauchförmige Folie (3) zumindest zu greifen und einen weiteren Abschnitt der schlauchförmigen Folie (3) zur Bildung eines weiteren Probebeutels (31) aus der Folienaufnahme (2) herauszuziehen.

## Beschreibung

Die vorliegende Erfindung betrifft eine Vorrichtung zur automatischen Abfüllung einer Probe eines pulver-/granulatförmigen Schüttgutes.

Im Stand der Technik sind Probenehmer für pulver-/granulatförmige Schüttgüter allgemein bekannt.

Die bekannten Probenehmer werden beispielsweise an Produktionsanlagen angeschlossen, um im laufenden Betrieb eine Probe eines in der Produktionsanlage vorhandenen Schüttgutes nehmen zu können. Die durch die Probenehmer gezogene Probe wird an einen Ausgang des Probenehmers transportiert und dort beispielsweise in eine Flasche abgefüllt.

Wenn mehrere Proben der Produktionsanlage zu entnehmen sind, muss ein Anwender entsprechende Flaschen manuell der Reihe nach an den Ausgang des Probenehmers anschließen und mit einer entsprechenden Probe füllen.

Insbesondere dann, wenn die Proben kontaminationsfrei in die Flaschen abzufüllen sind, gestaltet sich der Wechsel der Flaschen als langwierig und kompliziert.

Vor diesem Hintergrund ist es Aufgabe der Erfindung, eine Vorrichtung zu schaffen, die eine schnellere und einfachere Abfüllung einer pulver-/granulatförmigen Probe ermöglicht.

Diese Aufgabe wird mit einer Vorrichtung gemäß Patentanspruch 1 gelöst. Bevorzugte Ausführungsformen sind Gegenstand der Unteransprüche.

*Eine erfindungsgemäße Vorrichtung zur automatischen Abfüllung einer pulver-*/*granulatförmigen Probe weist insbesondere auf:*
*eine Folienaufnahme zur Aufnahme eines Folienvorrates an einer schlauchförmigen Folie, derart, dass ein Abschnitt der schlauchförmigen Folie außerhalb der Folienaufnahme zugänglich und zur Bildung eines Probebeutels radial verschließbar ist;*
*eine Probenführung zur Führung der pulver-*/*granulatförmigen Probe in den Probebeutel nach dessen Bildung; und*
*eine Auszugsvorrichtung, die eingerichtet ist, die schlauchförmige Folie zumindest zu greifen und einen weiteren Abschnitt der schlauchförmigen Folie zur Bildung eines weiteren Probebeutels aus der Folienaufnahme herauszuziehen.*

Die schlauchförmige Folie ist insbesondere eine Kunststofffolie, die so flexibel ist, dass sie manuell, insbesondere aber maschinell, leicht verformbar ist, um aus der Folie den offenen Probebeutel auszubilden und ihn bevorzugt nach Füllen mit der Probe zu verschließen.

Der Folienvorrat an schlauchförmiger Folie ist besonders bevorzugt ein Folienvorrat an einer Endlosfolie, die es ermöglicht, eine Vielzahl von Probebeutel hintereinander auszubilden und hierbei Proben sukzessive abzufüllen, bevor der Folienvorrat in der Folienaufnahme nachgefüllt werden muss.

Die Probenführung ist beispielsweise ein Fallrohr, durch das die Probe in den Probebeutel fällt.

Nachdem der Probebeutel gefüllt ist, wird er manuell oder bevorzugt maschinell geschlossen, sodass die Probe in dem Probebeutel (dauerhaft) eingeschlossen ist. Das Verschließen des gefüllten Probebeutels kann mit einem Verschlusselement, wie beispielsweise einer Klammer oder einem Kabelbinder erfolgen, oder durch Verschweißen der (Endlos)folie.

Die Auszugsvorrichtung zieht den weiteren Abschnitt der Folie vor oder nach dem Verschließen des zuvor gefüllten Probebeutels aus dem Folienvorrat.

Der (dauerhafte) Verschluss des gefüllten Probebeutels bildet bevorzugt gleichzeitig den (neuen) weiteren Probebeutel aus.

Die erfindungsgemäße Vorrichtung ist bevorzugt eine Vorrichtung, die bestimmungsgemäß an einen Ausgang eines beliebigen Probenahmesystems angeschlossen wird. Das Probenahmesystem entnimmt die Proben des Schüttgutes der Produktionsanlage sukzessive. Beispielsweise ist das Probenahmesystem ein Schlittenprobenehmer.

Die Vorrichtung ist bevorzugt an eine Steuerungsvorrichtung angeschlossen, die das Probenahmesystem und die Vorrichtung so ansteuert, dass Proben sukzessive genommen und sukzessive in Probebeutel geführt/gefüllt werden.

*Bevorzugt weist die Auszugsvorrichtung der Vorrichtung eine Klemmeinrichtung auf, die eingerichtet ist, die schlauchförmige Folie klemmend zu greifen; wobei*
*die Auszugsvorrichtung eingerichtet ist, die Klemmeinrichtung und*/*oder die Folienaufnahme, derart zu versetzen, dass der weitere Abschnitt der schlauchförmigen Folie zur Bildung eines weiteren Probebeutels aus der Folienaufnahme herausgezogen wird.*

Die Klemmeinrichtung ist bevorzugt eingerichtet, die schlauchförmige Folie in einem Bereich zu greifen, in dem sie zur Ausbildung des Probebeutels vorher radial verschlossen wurde, beispielsweise durch ein Verschlusselement oder einen Stoffschluss. Dieser dauerhafte Verschluss resultiert bevorzugt aus einem vorherigen Zyklus, in dem eine vorangehend genommene Probe in einen Probebeutel dauerhaft eingeschlossen wurde. Bevorzugt haltert die Klemmeinrichtung die Folie in diesem Bereich bei Führen/Füllen der Probe in den Probebeutel, um die Folie hierbei zusätzlich zu stabilisieren.

*Bevorzugt weist die Auszugsvorrichtung eine in einem Abstand zu der Klemmeinrichtung angeordnete Verschließvorrichtung auf, die eingerichtet ist, die schlauchförmige Folie, nachdem die Probe über die Probenführung in den Probebeutel geführt ist, zum Einschließen der Probe in dem Probebeutel durch ein Verschlusselement und*/*oder durch einen Stoffschluss zu verschließen.*

Der Abstand ist insbesondere zur Festlegung einer gewünschten Größe des Probebeutels gewählt.

Das Verschlusselement ist beispielsweise die genannte Klammer oder der genannte Kabelbinder. Der Stoffschluss wird beispielsweise durch Verschweißen der Folie hergestellt. Hierfür beinhaltet die Verschließvorrichtung bevorzugt Heizeinrichtungen oder Heißluftauslässe.

*Alternativ kann die Auszugsvorrichtung eine Verschließvorrichtung aufweisen, die die Funktion der Klemmeinrichtung übernimmt und zusätzlich eingerichtet ist, die schlauchförmige Folie durch ein*/*das Verschlusselement und*/*oder durch einen*/*den Stoffschluss zu verschließen.*

In diesem alternativen Fall wird die Verschließvorrichtung nach Füllen der Probe in den Probebeutel und Herausziehen des weiteren Abschnittes der Folie aus der Folienaufnahme gelöst und um eine vorbestimmte Strecke versetzt, um die Probe durch ein weiteres Verschließen der Folie in dem Probebeutel dauerhaft einzuschließen. Hierdurch lässt sich die Größe des Probebeutels einfacher variieren, indem die vorbestimmte Strecke geändert wird.

Das Verschlusselement oder Stoffschluss können in dieser Alternative wie vorstehend erwähnt ausgebildet sein und/oder realisiert werden.

Die Klemmeinrichtung beinhaltet bevorzugt Klemmbacken, die durch mindestens einen Pneumatikzylinder angetrieben sind. Die Verschließvorrichtung beinhaltet bevorzugt Schweißbacken zur Herstellung des Stoffschlusses, die ebenfalls durch Pneumatikzylinder angetrieben sind.

*Bevorzugt ist die Auszugsvorrichtung eingerichtet, die Klemmeinrichtung und*/*oder die Folienaufnahme und*/*oder die Verschließvorrichtung zyklisch in eine Ausgangsstellung zurückzuversetzen, um eine Vielzahl von Probebeuteln mit jeweils einer Probe zu füllen.*

Hierdurch entsteht eine Kette an gefüllten Probebeuteln, die der Anwender manuell oder automatisch durch eine Trennvorrichtung voneinander trennen kann.

Eine Spanneinrichtung kann bevorzugt vorgesehen sein, die eingerichtet ist, die schlauchförmige Folie radial zu einer Strömungsrichtung der Probe derart zu spannen, dass Innenbereiche der schlauchförmigen Folie an einem distalen Ende der Probenführung anliegen.

Die Spanneinrichtung kann aus Spannarmen aufgebaut sein, die beispielsweise an der Produktführung bevorzugt verstellbar befestigt sind.

Die gesamte Vorrichtung ist insbesondere so aufgebaut, dass das Abfüllen der Proben kontaminationsfrei, d.h. ohne Kontakt des Schüttgutes bzw. der pulver-/granulatförmigen Probe mit der Außenumgebung und dem Anwender, erfolgen kann.

Als bevorzugtes Merkmal kann die Vorrichtung eine Druckervorrichtung aufweisen, die die Probebeutel jeweils mit Informationen bedruckt.

Weiterhin kann die Vorrichtung eine Abdeckung aufweisen, mit der die Folienaufnahme zu einem gewünschten Zeitpunkt, beispielsweise vor

Nachfüllen des Folienvorrates, abgedeckt werden kann, um einen Washin-place-Vorgang durchzuführen.

Weitere bevorzugte Merkmale der Vorrichtung sind im Rahmen der Ausführungsform beschrieben.

Im Folgenden wird eine bevorzugte Ausführungsform der erfindungsgemäßen Vorrichtung unter Bezug auf die beigefügten Figuren erläutert.
**Figur 1** zeigt eine Ausführungsform der erfindungsgemäßen Vorrichtung zur Abfüllung einer pulver-/granulatförmigen Probe in einer perspektivischen Ansicht;
**Figur 2A** zeigt eine in X-Z-Ebene liegende Seitenansicht; **Figur 2B** zeigt eine Schnittansicht entlang der in Figur 2A gezeigten Schnittlinie 2B - 2B;
und **Figur 2C** zeigt eine Ansicht der Komponenten der Folienaufnahme 2 und der Produktführung 4 in einem auseinandergenommenen Zustand.
**Figuren 3A bis 3E** zeigen einzelne Schritte der bestimmungsgemäßen Funktionsweise der erfindungsgemäßen Vorrichtung.

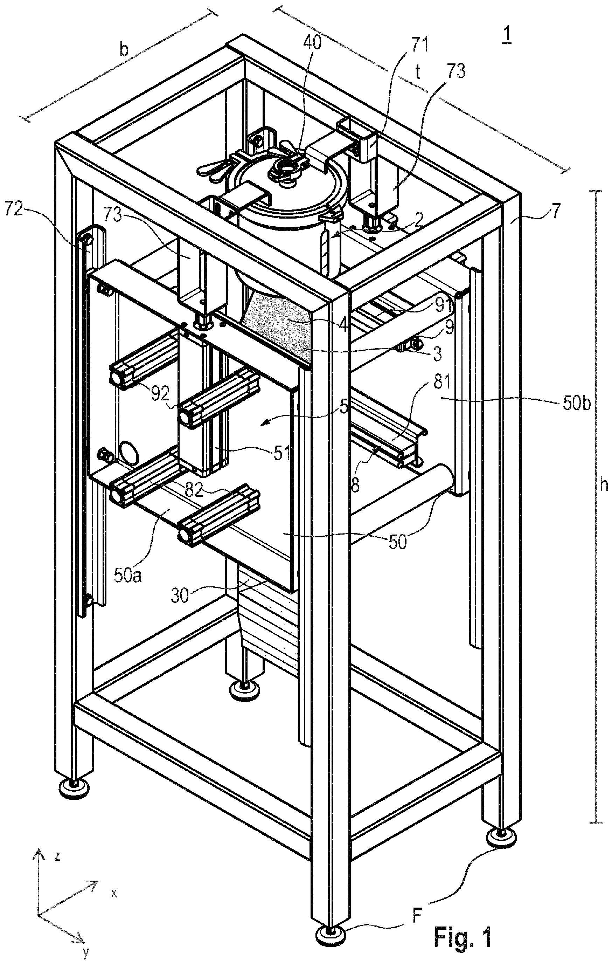

Die Figur 1 zeigt eine Ausführungsform einer erfindungsgemäßen Vorrichtung 1, die zur automatischen Abfüllung einer pulver-/granulatförmigen Probe eingerichtet und vorgesehen ist.

Die Probe stammt bevorzugt aus einer nicht gezeigten Produktionsanlage, in der ein pulver-/granulatförmiges Produkt, beispielsweise ein Schüttgut, vorhanden ist und einem Produktionsprozess unterzogen wird. Das Probenahmesystem entnimmt der Produktionsanlage die eigentliche Probe bevorzugt im laufenden Betrieb, bei der es sich um eine vorbestimmte Menge des Produktes/Schüttgutes handelt. Ein bevorzugtes Volumen der Probe liegt bei 800ml bis 1200ml, insbesondere bei 1000ml.

Beispielsweise ist das Probenahmesystem ein Schlittenprobenehmer, der der Produktionsanlage die definierte Menge an Schüttgut, d. h. die Probe, im laufenden Betrieb entnimmt. Eine Steuervorrichtung steuert das Probenahmesystem entsprechend.

Das Probenahmesystem transportiert die Probe zu der in Figur 1 gezeigten erfindungsgemäßen Vorrichtung 1, die bestimmungsgemäß an den Ausgang des Probenahmesystems angeschlossen ist/wird.

Die Vorrichtung 1 besitzt als wesentliche Elemente (i) eine Folienaufnahme 2, die in vertikaler Richtung (Z-Richtung) an einem oberen Ende der Vorrichtung 1 angeordnet ist und die einen Folienvorrat an schlauchförmiger Folie 3 aufnimmt, die bei bestimmungsgemäßer Verwendung der Vorrichtung 1 zur Bildung eines Probebeutels 30, 30a dient, (ii) eine Probenführung 4 zur Führung bzw. zum Leiten der pulver-/granulatförmigen Probe in den Probebeutel 30, 30a, und (iii) eine Auszugsvorrichtung 5, die bestimmungsgemäß dazu eingerichtet und bestimmt ist, die schlauchförmige Folie 3 zumindest zu greifen und einen (weiteren) Abschnitt der schlauchförmigen Folie 3 aus der Folienaufnahme 2 herauszuziehen.

Die in Figur 1 gezeigte Z-Richtung entspricht einer Höhen-Richtung der Vorrichtung 1, wobei eine Höhe h der Vorrichtung im Bereich von 140cm bis 170cm liegt, bevorzugt 160cm beträgt; die in Figur 1 gezeigte X-Richtung entspricht einer Breiten-Richtung der Vorrichtung 1, wobei eine Breite b der Vorrichtung im Bereich von 45cm bis 65cm liegt, bevorzugt 55cm beträgt; und die in Figur 1 gezeigte Y-Richtung entspricht einer Tiefen-Richtung der Vorrichtung 1, wobei eine Tiefe t der Vorrichtung im Bereich von 70cm bis 90cm liegt, bevorzugt 90cm beträgt.

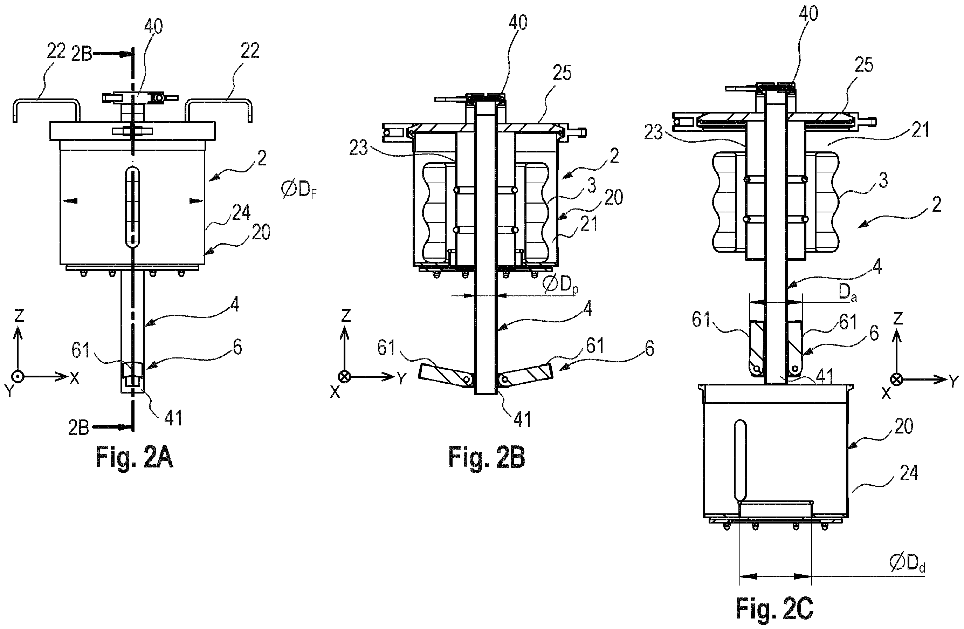

Figuren 2A bis 2C zeigen die Folienaufnahme 2 und die Produktführung 4 im Detail, wobei die Achsen des gezeigten (kartesischen) Koordinatensystems dem aus Figur 1 entsprechen.

Figur 2A zeigt eine in X-Z-Ebene liegende Seitenansicht, wobei die Y-Achse senkrecht zur Zeichenebene steht; Figur 2B zeigt eine Schnittansicht entlang der in Figur 2A gezeigten Schnittlinie 2B - 2B, wobei die Ansicht der Y-Z Ebene entspricht und die X-Achse senkrecht zur Zeichenebene steht; und Figur 2C zeigt eine Ansicht der Komponenten der Folienaufnahme 2 und der Produktführung 4 in einem auseinandergenommenen Zustand, wobei die Orientierung des Koordinatensystems mit der aus Figur 2B identisch ist.

Die Produktführung 4 ist beispielsweise ein Produktführungsrohr/Fallrohr mit einem bevorzugten Außendurchmesser Dₚ von 33,0cm und besitzt eine Anschlusseinrichtung 40, über die die Vorrichtung 1 an den Ausgang des nicht gezeigten Probenahmesystems angeschlossen ist/wird.

Die Anschlusseinrichtung 40 ist beispielsweise eine Schelle, die einen Flanschabschnitt der Produktführung 4 und einen Flanschabschnitt des Ausgangs des Probenahmesystems verbindet, indem sie beide Flansche umgreift und mittels einer Flügelschraube derart zusammengezogen wird, dass beide Flansche aneinandergedrückt werden.

Die durch das Probenahmesystem genommene und an ihrem Ausgang austretende Probe strömt durch die Produktführung 4 hindurch und tritt wiederum an einem distalen Ende 41 der Produktführung 4 aus. Aufgrund der gezeigten vertikalen Ausrichtung der Produktführung 4, die der in Figur 1 gezeigten Z-Richtung entspricht, strömt die Probe durch die Produktführung 4, indem sie durch die Produktführung 4 bzw. das Fallrohr hindurch fällt.

Die Produktführung 4 durchläuft die im Folgenden erläuterte Folienaufnahme 2 in Z-Richtung vollständig, wobei das distale Ende 41 der Produktführung 4 in einem Abstand zu der Folienaufnahme 2 angeordnet ist.

Eine Spannvorrichtung 6 befindet sich zwischen der Folienaufnahme 2 und dem distalen Ende 41 der Produktführung 4. Die Spannvorrichtung 6 ist bevorzugt im Bereich des distalen Endes 41 an der Produktführung 4 befestigt. In der gezeigten Ausführungsform befindet sie sich näher an dem distalen Ende 41 als an der Folienaufnahme 2.

Die Spannvorrichtung 6 beinhaltet zwei Spannarme 61, die drehbar gelagert an der Produktführung 4 befestigt sind. Die drehbare Lagerung sorgt dafür, dass die Spannarme 61 von einem in Figuren 2A und 2B gezeigten Zustand in einen in Figur 2C gezeigten Zustand verstellbar sind.

In dem in Figur 2A und 2B gezeigten Zustand erstrecken sich die Spannarme 61 quer zur Produktführung 4 (d.h. quer zur Z-Richtung) und liegen im Wesentlichen in der gezeigten X-Y-Ebene. Durch das Verstellen der Spannenarme 61 in den in Figur 2C gezeigten Zustand liegen diese an der Produktführung 4 an und besitzen dadurch eine geringere Erstreckung Dₐ in der X-Y-Ebene. Dₐ beträgt bevorzugt 8cm.

Ein Vorratsgehäuse 20 der Folienaufnahme 2 definiert einen Aufnahmeraum 21, in dem der Folienvorrat an schlauchförmiger Folie 3 aufgenommen ist.

Das Vorratsgehäuse 20 umfasst einen Befestigungsabschnitt 25, der einen flachen, plattenartigen Aufbau besitzt, der sich in einer Ebene (X-Y-Ebene) senkrecht zur Z-Achse erstreckt. Bevorzugt ist der Befestigungsabschnitt 25 in Bezug auf die Z-Achse kreisförmig ausgebildet.

Zudem weist das Vorratsgehäuse 20 ein Abdeckgehäuse 24 auf, das mit dem Befestigungsabschnitt 25 lösbar verbunden ist (Figuren 2A und 2B). Das Abdeckgehäuse besitzt bevorzugt einen Durchmesser D_{F} von bevorzugt 21cm. Die Verbindung zwischen Befestigungsabschnitt 25 und Abdeckgehäuse 24 erfolgt bevorzugt wiederum über eine Schelle, die einen Flanschabschnitt des Befestigungsabschnitts 25 und einen Flanschabschnitt des Abdeckgehäuses 24 umgreift und in Z-Richtung aneinandergedrückt, indem die Schelle mittels einer Flügelschraube zusammengezogen wird.

Ein Durchgang ist in einem in Z-Richtung unteren Abschnitt des Abdeckgehäuses 24 gebildet. Die Produktführung 4 durchläuft diesen Durchgang des Abdeckgehäuses 24.

An der in Z-Richtung oberen Seite des Befestigungsabschnitts 25 sind in der bevorzugten Ausführungsform 2 zwei sich radial zur Z-Achse erstreckende Haken 22 ausgebildet, die dazu dienen, die Folienaufnahme 2 in eine Aufhängung 71 eines in Figur 1 gezeigten Gestells 7 der Vorrichtung 1 einzuhängen. Abmessungen h/b/t sind oben bereits genannt. Das Gestell 7 steht mit seinen Füßen F auf einem Untergrund bzw. auf dem Boden. Die an dem Gestell 7 ausgebildete Aufhängung 71 ist beispielsweise aus U-förmigen Elementen aufgebaut, die mit den Haken 22 zusammenwirken, insbesondere mit denen die Haken 22 verschraubt und/oder in die die Haken 22 eingehängt sind.

An der in Figur 2B in Z-Richtung unteren Seite hat der Befestigungsabschnitt 25 einen Trägerkörper 23, der rohrförmig ausgebildet ist. Der Folienvorrat an schlauchförmiger Folie 3 wird an dem Trägerkörper 23 befestigt. Der Folienvorrat ist bevorzugt ein Vorrat an Endlosfolie 3, die aus dem Folienvorrat solange herausziehbar ist, bis das Ende der Endlosfolie 3 erreicht ist und der Folienvorrat aufgebraucht ist. Endlosfolie 3 bedeutet, dass mehrere Proben abgefüllt werden können, bevor ein Nachfüllen der Folienaufnahme erfolgen muss.

Zur Befestigung des Folienvorrates muss das Abdeckgehäuse 24 zuerst gelöst und entfernt werden (Figur 2C). Letzteres erfolgt, indem das Abdeckgehäuse 24 in einem Schritt durch Betätigung der entsprechenden Schelle von dem Befestigungsabschnitt 25 gelöst und anschließend vertikal nach unten weggezogen wird. Die Spannvorrichtung 6 bzw. die Spannarme 61 sind hierfür in den in Figur 2C gezeigten Zustand verbracht, in dem sie kleinere Abmessungen/Dimensionen (Dₐ) in der X-Y-Ebene besitzen als der in dem Abdeckgehäuse 24 gebildete Durchgang. Ein Durchmesser D_{d} des Durchgangs beträgt bevorzugt 10,0cm.

Anschließend wird der Folienvorrat 3 über den Trägerkörper 23 geschoben. Sofern der Folienvorrat 3 keine ausreichende Eigensteifigkeit besitzt, kann er auf einem zusätzlichen Folienträger sitzen. Bevorzugt besitzt der Trägerkörper 23 zur Befestigung des Folienvorrates mindestens eine Nut, insbesondere für den Fall, dass der Folienvorrat der erwähnte Endlosfolienvorrat an Endlosfolie 3 ist. In diesem Fall wird ein Ende der Endlosfolie 3 beispielsweise mittels eines O-Rings in der Nut festgeklemmt.

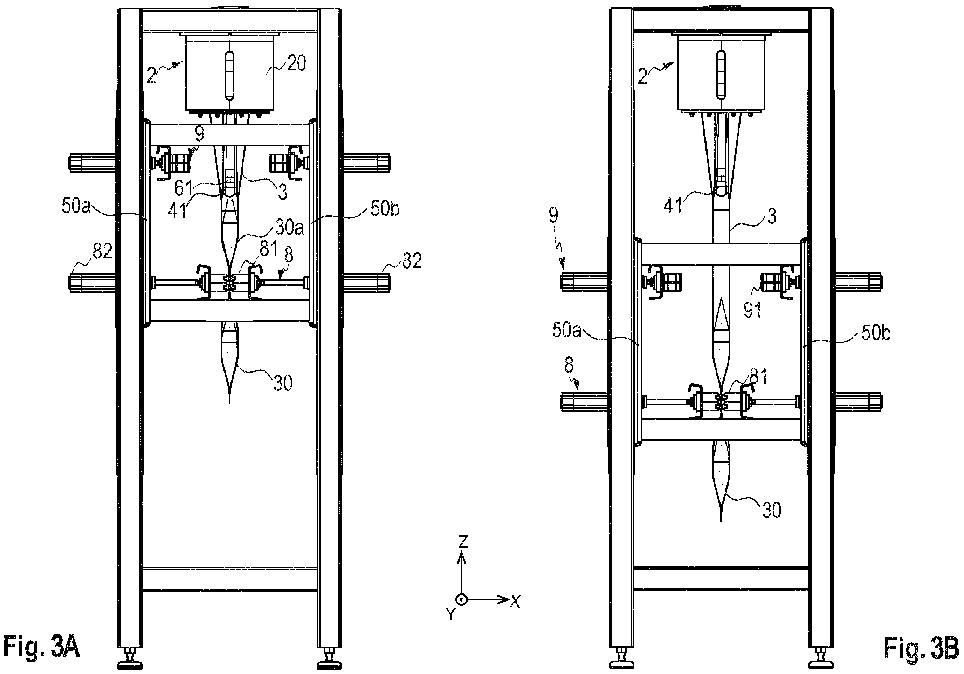

Die in Fig. 2B und 2C gezeigte zweite Nut am Trägerkörper 23 dient dazu, dass ein Nachfüllen der Folienaufnahme 2 mit Endlosfolie 3 kontaminationsfrei erfolgen kann, indem die neue Endlosfolie 3 an der oberen Nut befestigt wird, nachdem der die Restfolie haltende O-Ring auf die untere Nut verschoben wurde, und anschließend die Restfolie gelöst und, wie eine Probe (siehe Figuren 3A bis 3E), in der neuen Endlosfolie eingeschlossen wird.

Um die Folienaufnahme 2 betriebsbereit zu machen, wird in dem Zustand aus Figur 2C ein Abschnitt der Endlosfolie 3 bzw. ihr Anfang aus dem Endlosfolienvorrat herausgezogen, bis er sich unterhalb des distalen Endes 41 der Produktführung 4 befindet.

Anschließend wird das Abdeckgehäuse 24 über den sich unterhalb des distalen Endes 41 befindenden Abschnitt der Endlosfolie 3 und die Produktführung 4 geführt und an dem Befestigungsabschnitt 25 mittels der Schelle befestigt.

Die Endlosfolie 3 verläuft in diesem montierten Zustand von dem Aufnahmeraum 21 ausgehend zwischen Produktführung 4 und einer Innenkontur des das Abdeckgehäuse 24 durchbrechenden Durchgangs bis unter das distale Ende 41 der Produktführung 4.

Ein ringförmiger Kragen des Abdeckgehäuses 24, der an dem Durchgang in den Aufnahmeraum 21 der Folienaufnahme 2 vorspringt, befindet sich in dem montierten Zustand (Figur 2B) zwischen dem Endlosfolienvorrat und dem Trägerkörper 23. Der Kragen wirkt als Abstreifkontur, wenn ein (weiterer) Abschnitt der Folie 3 aus der Folienaufnahme 2 herausgezogen wird.

Ein Anwender kann schließlich die Folienaufnahme 2 in die Aufhängung 71 des Gestells 7 einhängen.

Des Weiteren beinhaltet die Vorrichtung 1 die in Figur 1 gezeigte Auszugsvorrichtung 5.

Die Auszugsvorrichtung 5 umfasst einen Halterungsrahmen 50, der zwei Halterungsplatten 50a und 50b aufweist, die zusammen eine Klemmeinrichtung 8 und eine Verschließvorrichtung 9 haltern.

Die Halterungsplatten 50a, 50b sind jeweils an dem Gestell 7 in Schienen 72 eingesetzt und hierdurch vertikal in Höhen-Richtung (Z-Richtung) versetzbar. Hierfür besitzt die Auszugsvorrichtung 5 einen pneumatischen Antrieb 51, beispielsweise einen pneumatisch ausfahrbaren Zylinder 51 auf jeder der Halterungsplatten 50a, 50b. Jeder der pneumatischen Zylinder 51 ist einerseits an der jeweiligen Halterungsplatte 50a,b und andererseits an einem Lager 73 des Gestells 7 befestigt.

Die bereits erwähnte und nicht gezeigte Steuerungsvorrichtung ist eingerichtet, den pneumatischen Antrieb 51 bzw. die pneumatischen Zylinder 51 synchron anzusteuern, sodass der jeweilige Zylinder 51 ausfährt oder einfährt. Durch Ausfahren der jeweiligen Zylinder 51 bewegt sich der Halterungsrahmen 50 bzw. die Halterungsplatten 50a,b vertikal in Höhen-Richtung nach unten; durch Einfahren der Zylinder 51 bewegt sich der Halterungsrahmen 50 bzw. die Halterungsplatten 50a,b vertikal in Höhen-Richtung nach oben.

Die Klemmeinrichtung 8 weist Klemmbacken 81 auf, die jeweils an einer der den Halterungsrahmen 50 bildenden Halterungsplatten 50a,b befestigt sind. Die Klemmbacken 81 haben in Tiefen-Richtung (Y-Richtung) größere Abmessungen als der in X-Y-Ebene liegende Durchmesser der schlauchförmigen Endlosfolie 3. Bevorzugt sind die Klemmbacken 81 symmetrisch zur Produktführung 4 angeordnet.

Die Klemmbacken 81 sind an den Halterungsplatten 50a,b in X-Richtung verfahrbar befestigt. Hierfür sind an jeder der Halterungsplatten 50a,b auf der jeweiligen der Endlosfolie 3 abgewandten Seite mindestens ein Pneumatikzylinder 82 befestigt, der die entsprechende Halterungsplatte 50a,b durchsetzt und die jeweilige Klemmbacke 81 verfahrbar haltert. Bevorzugt sind an jeder der Halterungsplatten 50a,b zwei Pneumatikzylinder 82 vorgesehen.

Die nicht gezeigte Steuerungsvorrichtung ist eingerichtet, die Pneumatikzylinder 82 in X-Richtung aus- und einzufahren, wodurch die Klemmbacken 81 der Klemmeinrichtung 8 in Breiten-Richtung (X-Richtung) versetzt werden können, um die Endlosfolien klemmend, zusammenzudrücken bzw. zu greifen.

Die Verschließvorrichtung 9 ist ebenfalls an dem Halterungsrahmen 50 befestigt und befindet sich in vertikaler Richtung (Z-Richtung) zwischen der Folienaufnahme 2 und der Klemmeinrichtung 8.

Die Verschließvorrichtung 9 ist ähnlich wie die Klemmeinrichtung 8 aufgebaut.

Die Verschließvorrichtung 9 weist Schweißbacken 91 auf, die jeweils an einer den Halterungsrahmen 50 bildenden Halterungsplatten 50a,b befestigt sind. Beide Schweißbacken 91 werden durch mindestens einen, bevorzugt zwei Pneumatikzylinder 92 verstellbar gehaltert. Die Pneumatikzylinder 91 der Verschließvorrichtung 9 sind identisch aufgebaut und steuerbar wie die Pneumatikzylinder 82 der Klemmeinrichtung 8, wobei auf diesbezügliche Ausführungen verwiesen wird. Unterschiedlich ist lediglich, dass die Pneumatikzylinder 92 der Verschließvorrichtung 9 gegenüber den Pneumatikzylinder 82 der Klemmeinrichtung 8 zu unterschiedlichen Zeitpunkten angesteuert werden.

Die Schweißbacken 91 sind eingerichtet, die Endlosfolie 3 stoffschlüssig zu verschließen. Dies erfolgt dadurch, dass die nicht gezeigte Steuerungsvorrichtung die Pneumatikzylinder 92 ansteuert und die Schweißbacken 91 so weit in X-Richtung versetzt, dass sie die Endlosfolie 3 zusammendrücken. In dem erreichten, die Endlosfolie 3 zusammendrückenden Zustand sind oder werden die Schweißbacken 91 derart aufgeheizt, dass sie die Endlosschlauchfolie 3 stoffschlüssig verschweißen.

Beispielsweise können in den Schweißbacken 91 hierfür elektrische Heizeinrichtungen und/oder Heißluftauslässe ausgebildet sein.

Figuren 3A bis 3E zeigen die bestimmungsgemäße Funktionsweise der Vorrichtung 1 zur automatischen Abfüllung einer pulver-/granulatförmigen Probe des Schüttgutes. Der gesamte Ablauf, der unter Bezug auf Figuren 3A bis 3E beschrieben wird, wiederholt sich zyklisch bzw. durchläuft wiederkehrende Schritte, sodass eine Vielzahl von Proben zyklisch abgefüllt wird.

Figur 3A zeigt einen Zustand der Vorrichtung 1 in dem bestimmungsgemäß zyklisch durchgeführten Abfüllvorgang der Probe, wobei bereits eine erste Probe in einen ersten Probebeutel 30 abgefüllt und darin eingeschlossen ist.

In dem gezeigten Zustand sind die Pneumatikzylinder 82 der Klemmeinrichtung 8 ausgefahren, sodass die Klemmbacken 81 die Endlosschlauchfolie 3 greifen und haltern. Die Endlosschlauchfolie 3 ist in dem Bereich, an dem die Klemmbacken 81 anliegen, bereits verschweißt, was aus dem vorangehenden Zyklus resultiert. Die Endlosschlauchfolie 3 bildet deshalb in Höhen-Richtung (Z-Richtung) über den Klemmbacken 81 einen offenen Probebeutel 30a.

Eine genommene Probe strömt durch die Produktführung 4 hindurch in den gebildeten Probebeutel 30a. Volumen der Probe ist bevorzugt im Bereich 1000ml.

Die Auszugsvorrichtung 5 ist durch Ansteuerung ihrer pneumatischen Zylinder 51 so positioniert, dass die Verschließvorrichtung 9 bzw. die Schweißbacken 91 sich zwischen dem distalen Ende 41 der Produktführung 4 und dem Vorratsgehäuse 20 der Folienaufnahme 2 befinden.

Die Spannarme 61 der Spannvorrichtung 6 sind in Figur 3A in den in Figuren 2A und 2B gezeigten Zustand verstellt, d. h. erstrecken sich in Y-Richtung (Tiefen-Richtung). Dies hat zur Folge, dass die Spannarme 61 sich soweit erstrecken, dass sie an Innenbereichen der Endlosschlauchfolie 3 anliegen und diese radial in Y-Richtung spannen.

Aus Figuren 3A und 2A ist ersichtlich, dass die Spannarme 61 in X-Richtung (Breiten-Richtung) Abmessungen besitzen, die kleiner/gleich dem Außendurchmesser Dₚ der Probenführung 4 sind.

Das Spannen der Endlosschlauchfolie 3 in Y-Richtung gepaart mit den Abmessungen der Spannarme 61 in X-Richtung führt dazu, dass Innenbereiche der Endlosfolie 3 an dem distalen Ende 41 der Probenführung 4 und den in Z-Y-Ebene liegenden Seiten der Spannarme 61 anliegen. Das verhindert (oder vermindert zumindest) ein Übertreten von Teilen der in den Probebeutel 30a strömenden Probe in einen in Z-Richtung über dem distalen Ende 41 liegenden Bereich (der auf Höhe der Schweißbacken 91 liegt).

Wenn die Probe vollständig in den Probebeutel 30a gefüllt ist, endet der in Figur 3A gezeigte Schritt.

Die nicht gezeigte Steuervorrichtung steuert die pneumatischen Zylinder 51 der Auszugsvorrichtung 5 anschließend an, sodass der Halterungsrahmen 50 bzw. die Halterungsplatten 50a, 50b in den in Figur 3B gezeigten Zustand in Z-Richtung vertikal nach unten gefahren werden. Die Klemmbacken 81 und die Schweißbacken 91 werden gleichermaßen mit versetzt, wobei die Klemmbacken 81 hierbei unverändert bleiben und die Endlosschlauchfolie 3 klemmend greifen.

Die Auszugsvorrichtung 5 zieht bei diesem Vorgang einen weiteren Abschnitt der Endlosschlauchfolie 3 aus der Folienaufnahme 2. Der Bereich der Endlosfolie 3, der sich in Figur 3A in vertikaler Richtung (Z-Richtung) über dem distalen Ende 41 der Produktführung 4 befand, ist nunmehr unterhalb des distalen Endes 41 der Produktführung 4 angeordnet. Gleichermaßen befinden sich die Schweißbacken 91 nunmehr unterhalb des distalen Endes 41.

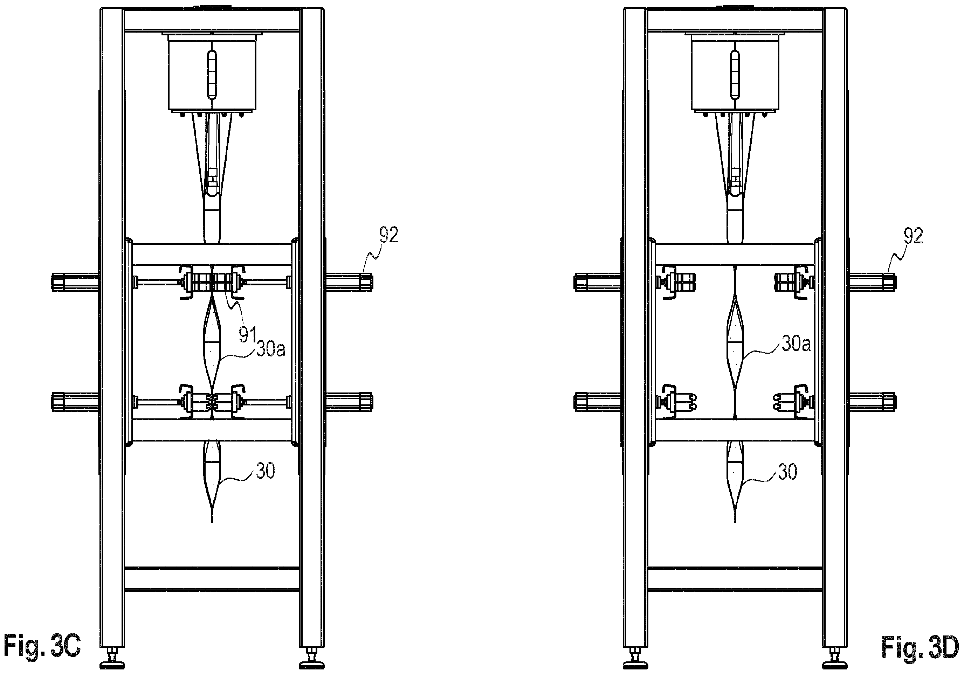

Hiernach geht der Vorgang in Figur 3C über. Im Detail steuert die nicht gezeigte Steuerungsvorrichtung die Verschließvorrichtung 9 derart an, dass die Pneumatikzylinder 92 ausfahren und die Schweißbacken 91 die Endlosfolie 3 zusammendrücken.

Hiernach verschließen die Schweißbacken 91 den Probebeutel 30a, sodass die Probe in dem Probebeutel 30 vollständig und dauerhaft eingeschlossen ist. Insbesondere verschließen die Schweißbacken 91 die Endlosfolie 3 stoffschlüssig, indem sie die Endlosfolie 3 aufheizen und verschweißen.

Anschließend steuert die Steuerungsvorrichtung die Pneumatikzylinder 92 der Verschließvorrichtung 9 an, sodass diese sich wieder einziehen. Der entsprechend erreichte Zustand ist in Figur 3D gezeigt.

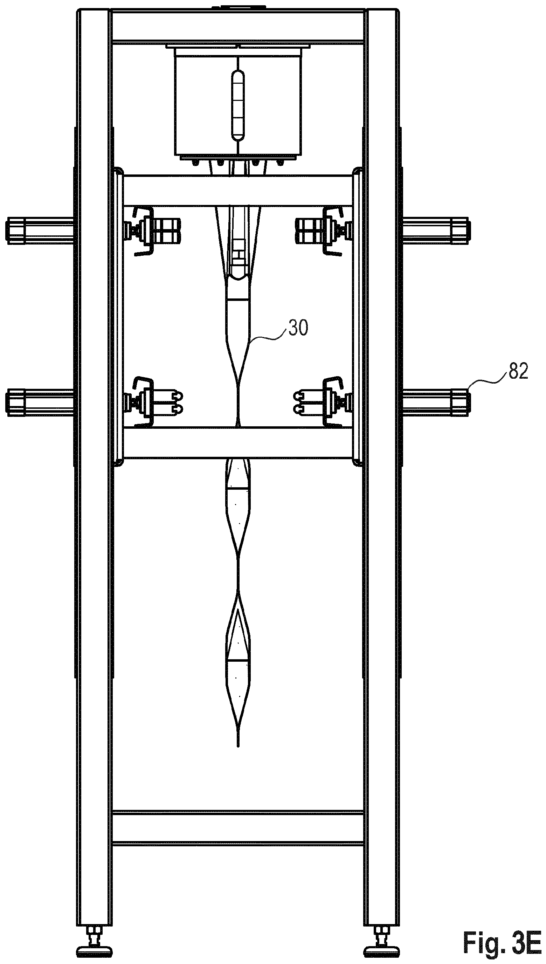

Hiernach wird der Halterungsrahmen 50 bzw. die Halterungsplatten 50a,b in vertikaler Richtung nach oben Verfahren, indem die Steuerungsvorrichtung den pneumatischen Antrieb 51 der Auszugsvorrichtung 5 ansteuert. Der entsprechend erreichte Zustand ist in Figur 3E gezeigt.

Letztendlich steuert die Steuerungsvorrichtung in Figur 3E die Pneumatikzylinder 82 der Klemmvorrichtung 8 an, wodurch diese wieder ausgefahren werden und die Endlosfolie 3 in dem Bereich, an dem die Endlosfolie 3 in Figur 3C durch die Schweißbacken 91 stoffschlüssig verschlossen wurde, wiederum greifen.

Der nunmehr erreichte Zustand entspricht dem in Figur 3A gezeigten Ausgangspunkt.

In Abhängigkeit davon, wie viele Proben automatisch in Probebeutel 30, 30a abzufüllen sind, wiederholt sich der unter Bezug auf Figuren 3A bis 3E beschriebene Ablauf zyklisch.

### (Nachfüllvorgang Endlosfolie 3)

Wenn der Endlosfolienvorrat erschöpft ist und die Folienaufnahme 2 neu befüllt werden muss, öffnet der Anwender die Folienaufnahme 2 und befestigt einen neuen Endlosfolienvorrat an dem Trägerkörper 23, wie es unter Bezug auf Figur 2C erläutert wurde. Nachdem der Anwender den Folienvorrat wieder geschlossen hat, indem er das Abdeckgehäuse 24 mittels der Schelle an dem Befestigungsabschnitt 25 fixiert hat, zieht er den offenen Anfang der Endlosfolie 3 manuell soweit unter das distale Ende 41 bis die Endlosfolie 3 sich zwischen den Schweißbacken 91 befindet. Die Auszugsvorrichtung 5 befindet sich beispielsweise in der in Figur 3C gezeigten Position.

Die Verschließvorrichtung 9 bzw. Schweißbacken 91 werden durch die Steuerungsvorrichtung angesteuert und verschweißen das offene Ende der Endlosfolie 3, wodurch der erste offene Probebeutel 30 gebildet wird und zur Abfüllung bereitsteht. Die Auszugsvorrichtung 5 verfährt anschließend in den in Figur 3A gezeigten Zustand und der automatische, zyklische Vorgang beginnt.

### (Modifikationen)

In der vorangehend beschriebenen Ausführungsform der erfindungsgemäßen Vorrichtung 1 sind die Klemmeinrichtung 8 und die Verschließvorrichtung 9 getrennt voneinander aufgebaut und sind in einem Abstand zueinander angeordnet. Sie besitzen jeweils eigenständige Pneumatikzylinder 82, 92, Klemmbacken 81 und Schweißbacken 91.

Es ist allerdings auch denkbar, dass lediglich die Verschließvorrichtung 9 vorgesehen ist und sie gleichzeitig auch die Funktion der Klemmeinrichtung 8 übernimmt. Für diesen Fall ist es bevorzugt, dass die Pneumatikzylinder 92 und die entsprechenden Schweißbacken 91 in vertikaler Richtung weiter nach unten versetzt sind, beispielsweise in vertikaler Richtung in der Mitte der Halterungspatten 50a, 50b angeordnet sind.

Der unter Bezug auf Figur 3A bis 3E beschriebene Ablauf verändert sich durch die Modifikation dann dahingehend, dass die Verschließvorrichtung 9 bzw. die Schweißbacken 91 die Folie 3 in Figur 3A greifen und klemmend haltern, solange bis der Zustand aus Figur 3B erreicht ist.

Anschließend werden die Pneumatikzylinder 92 angesteuert und eingezogen, und der Halterungsrahmen 5 soweit versetzt, dass die Schweißbacken 91 auf gleicher Höhe wie in Figur 3C angeordnet sind und die Endlosfolie 3 durch Ansteuerung der Pneumatikzylinder 92 verschweißen. Der Halterungsrahmen 5 fährt anschließend vertikal wieder nach unten, wodurch ein weiterer Abschnitt der Endlosschlauchfolie 3 aus der Folienaufnahme 2 gezogen und ein weiterer Beutel gebildet wird.

## Patentansprüche

1. Vorrichtung (1) zur automatischen Abfüllung einer pulver-/granulatförmigen Probe, aufweisend:
eine Folienaufnahme (2) zur Aufnahme eines Folienvorrates an einer schlauchförmigen Folie (3), derart, dass ein Abschnitt der schlauchförmigen Folie (3) zugänglich und zur Bildung eines Probebeutels (30) radial verschließbar ist;
eine Probenführung (4) zur Führung der pulver-/granulatförmigen Probe in den Probebeutel (30, 30a) nach dessen Bildung; und
eine Auszugsvorrichtung (5), die eingerichtet ist, die schlauchförmige Folie (3) zumindest zu greifen und einen weiteren Abschnitt der schlauchförmigen Folie (3) zur Bildung eines weiteren Probebeutels (31) aus der Folienaufnahme (2) herauszuziehen.

2. Vorrichtung (1) nach Anspruch 1, wobei
die Auszugsvorrichtung (5) eine Klemmeinrichtung (8) aufweist, die eingerichtet ist, die schlauchförmige Folie (3) klemmend zu greifen; und
die Auszugsvorrichtung (5) eingerichtet ist, die Klemmeinrichtung (8) und/oder die Folienaufnahme (2), derart zu versetzen, dass der weitere Abschnitt der schlauchförmigen Folie (3) zur Bildung eines weiteren Probebeutels (30a) aus der Folienaufnahme (2) herausgezogen wird.

3. Vorrichtung (1) nach Anspruch 2, wobei
die Auszugsvorrichtung (5) eine in einem Abstand zu der Klemmeinrichtung (8) angeordnete Verschließvorrichtung (9) aufweist, die eingerichtet ist, die schlauchförmige Folie (3), nachdem die Probe über die Probenführung (4) in den Probebeutel (30, 30a) geführt ist, zum Einschließen der Probe in dem Probebeutel (30, 30a) durch ein Verschlusselement und/oder durch einen Stoffschluss zu verschließen.

4. Vorrichtung (1) gemäß Patentanspruch 2, wobei
die Auszugsvorrichtung (5) eine Verschließvorrichtung (9) aufweist, die die Funktion der Klemmeinrichtung (8) übernimmt und zusätzlich eingerichtet ist, die schlauchförmige Folie durch ein Verschlusselement und/oder durch einen Stoffschluss zu verschließen.

5. Vorrichtung (1) nach Anspruch 3 oder 4, wobei
die Auszugsvorrichtung (5) eingerichtet ist, die Klemmeinrichtung (8) und/oder die Folienaufnahme (2) und/oder die Verschließvorrichtung (9) zyklisch in eine Ausgangsstellung zurückzuversetzen, um eine Vielzahl von Probebeuteln (30, 30a) mit jeweils einer Probe zu füllen.

6. Vorrichtung (1) nach einem der vorangehenden Ansprüche, wobei
der Folienvorrat in einem Vorratsgehäuse (20) aufgenommen ist und die Probeführung (4) das Vorratsgehäuse (20) durchläuft und an einem distalen Ende (41) außerhalb des Vorratsgehäuses (20) endet;
der Abschnitt der schlauchförmigen Folie (3) zur Bildung des Probebeutels (30, 30a) bestimmungsgemäß derart radial verschlossen wird, dass die schlauchförmige Folie (3) das distale Ende (41) der Probeführung (4) einschließt; und
ein Bereich der schlauchförmigen Folie (3), in dem sie, um die Probe in dem Probebeutel (30, 30a) einzuschließen, bestimmungsgemäß verschlossen wird, sich bei bestimmungsgemäßem Führen/Füllen der Probe in den Probebeutel (30, 30a) zwischen dem distalen Ende (41) und dem Vorratsgehäuse (20) befindet.

7. Vorrichtung (1) nach Anspruch 6, weiterhin aufweisend
eine Spanneinrichtung (6), die eingerichtet ist, die schlauchförmige Folie (3) radial zu einer Strömungsrichtung der Probe derart zu spannen, dass Innenbereiche der schlauchförmigen Folie (3) an dem distalen Ende (41) der Probenführung (4) und bevorzugt an der Spanneinrichtung anliegen.

8. Vorrichtung (1) nach Anspruch 7, wobei
die Spanneinrichtung (6) an der Produktführung (4) zwischen dem distalen Ende (41) und dem Vorratsgehäuse (20) befestigt ist und von der schlauchförmigen Folie (3) eingeschlossen ist.

9. Vorrichtung (1) nach einem der Ansprüche 3 bis 8, wobei
die Auszugsvorrichtung (5) einen Halterungsrahmen (50) aufweist, der die Klemmeinrichtung (8) und die Verschließvorrichtung (9) haltert, und eingerichtet ist, den Halterungsrahmen (50) relativ zu der Folienaufnahme zyklisch zu versetzen, um eine Vielzahl von Probebeuteln (30, 30a) zu füllen.

10. Vorrichtung (1) gemäß Anspruch 9, weiterhin aufweisend
eine Aufhängung (71), die an einem Gestell (7) der Vorrichtung (1) ausgebildet ist und über die das Vorratsgehäuse (20) derart aufgehängt ist, dass die schlauchförmige Folie (3) vertikal aus der Folienaufnahme (2) herausgezogen werden kann und der Halterungsrahmen (50) an dem Gestell (7) versetzbar befestigt ist.

11. Vorrichtung (1) nach Anspruch 10, wobei die Klemmeinrichtung (8) und/oder die Verschließvorrichtung (9) an dem Halterungsrahmen (50) befestigt sind.

12. Vorrichtung (1) nach einem der Ansprüche, wobei
die Auszugsvorrichtung (5) einen pneumatischen Antrieb (51) besitzt, der den Halterungsrahmen (50) relativ zu dem Gestell (7) vertikal unterhalb des Vorratsgehäuses (20) versetzen kann.

13. Vorrichtung (1) nach Anspruch 11 oder 12, wobei die Klemmeinrichtung (8) und/oder die Verschließvorrichtung (9) pneumatisch betrieben sind und der jeweilige pneumatische Antrieb (82,92) an dem Halterungsrahmen (50) montiert ist.

14. Vorrichtung (1) gemäß einem der Ansprüche 10 bis 13, wobei
das Vorratsgehäuse (20) einen Befestigungsabschnitt (25), über den das Vorratsgehäuse (20) an der Aufhängung (71) aufgehängt ist und an dem ein Trägerkörper (23) ausgebildet ist, und ein Abdeckgehäuse (24), das an dem Befestigungsabschnitt (25) lösbar befestigt ist, aufweist;
an dem Trägerkörper (23) der Folienvorrat nach Lösen des Abdeckgehäuses (24) befestigbar ist;
in dem Abdeckgehäuse (24) ein Durchgang ausgebildet ist, durch den hindurch die Probeführung (4) verläuft und durch den hindurch die schlauchförmige Folie zwischen der Probeführung (4) und dem Abdeckgehäuse (24) verläuft; und
die Spanneinrichtung (6) an der Produktführung (4) derart verstellbar ist, dass sie geringere Dimensionen als der Durchgang aufweist, und das Abdeckgehäuse (24) nach Lösen vertikal entfernt werden kann, ohne die Produktführung (4) demontieren zu müssen.

15. Vorrichtung (1) nach Anspruch 14, wobei das Abdeckgehäuse (24) im Bereich des Durchgangs eine Abstreifkontur aufweist, an der die schlauchförmige Folie (3) bei Herausziehen des weiteren Abschnitts sich abstreift.
